# EUROPEAN PATENT APPLICATION

(11) **EP 2 426 570 A1**
(43) Date of publication of application: **07.03.2012**
(21) Application number: 10769577.7
(22) Date of filing: 25.03.2010
(51) Int. Cl.: G05F 1/00, G05F 1/67, H01L 31/04, H01M 8/04, H01M 10/44

(54) **CONTROL DEVICE AND CONTROL METHOD**

(30) Priority: 30.04.2009 JP 2009110885
(71) Applicant: Sharp Kabushiki Kaisha, Osaka-shi, Osaka 545-8522 (JP)
(72) Inventor: MATSUI, Ryoji, Osaka-shi, Osaka 545-8522 (JP)
(74) Representative: Müller - Hoffmann & Partner
(86) International application number: PCT/JP2010/055246
(87) International publication number: WO 2010/125878

(57) **Abstract**

There is provided a control apparatus that instantaneously switches a DC/DC converter from a maximum-power-point tracking operation to an output voltage control operation, and can constantly supply an electric power to a load.

The control apparatus includes a first electric power supply device, a second electric power supply device that operates as a voltage source and has a supply voltage changing depending on conditions, an electric power converter that converts electric powers of the first electric power supply device and the second electric power supply device into desired electric powers, a monitoring unit that acquires device information of the second electric power supply device and output information of the electric power converter, and a control unit that controls the electric power converter on the basis of the information acquired by the monitoring unit.

## Description

### TECHNICAL FIELD

The present invention relates a control apparatus including a first electric power supply device and a second electric power supply device that operates as a voltage source and a supply voltage of which changes depending on conditions, and to a control method. As the first electric power supply devices, there are, for example, a solar cell, a wind power generator, an engine generator, and a fuel cell. As the electric power supply devices the supply voltage of which changes depending on conditions, there are a secondary battery and a capacitor.

### BACKGROUND ART

A distributed power supply using a solar cell, a wind power generator, an engine generator, or a fuel cell has been widely used in recent years, and a technique, which combines the distributed power supply with a storage facility to equalize an output from the distributed power supply such as a solar cell or a wind power generator that causes a variation in output, has been also developing. However, when an electric power generated by the distributed power supply is charged in a storage battery and is supplied in a load, there is a problem of a power conversion loss that is caused when the electric power passes through an electric power converter a large number of times.
With respect to an electric power supply apparatus using a solar cell and a storage battery as electric power supply devices, a method of solving the above problem is described in Japanese Unexamined Patent Publication No. 2007-201257. Since a solar power generation system in which a storage battery is connected in parallel with a solar cell operates while regulating the solar cell to a storage battery voltage, it is known that a DC/DC converter in the solar power generation system cannot perform a maximum-power-point tracking operation. However, when the storage battery is fully charged, the storage battery cannot be further charged. For this reason, the storage battery is temporarily disconnected from the solar cell, and, meanwhile, the DC/DC converter can perform a maximum-power-point tracking operation.
Japanese Unexamined Patent Publication No. 2007-201257 solves the above problems and discloses a technique in which, when a storage battery is disconnected in a full-charge condition, a full-charge condition or an off condition of a cutoff element is detected to change the DC/DC converter from an output voltage control operation to a maximum-power-point tracking operation.

### SUMMARY OF THE INVENTION

### PROBLEMS TO BE SOLVED BY THE INVENTION

In Japanese Unexamined Patent Publication No. 2007-201257, when the DC/DC converter changes from the maximum-power-point tracking operation into the output voltage control operation, the change is made after a predetermined period of time has elapsed. In Japanese Unexamined Patent Publication No. 2007-201257, since an amount of a load is controlled, the operation switching time does not cause a problem.
However, when a solar power generation system is installed in an ordinary house, an amount of a load varies depending on household electric power needs. For this reason, the following problem is caused. For example, it is assumed that a storage battery is fully charged and then disconnected from a corresponding solar cell and a DC/DC converter performs a maximum-power-point tracking operation. In this case, a power supply from the storage battery may be requested due to a variation in load amount or a variation in insolation. In this case, in order to output an electric power from the storage battery, the operation of the DC/DC converter needs to be switched to the output voltage control operation. In this operation switching, information on an input/output power of at least an inverter needs to be monitored. If a switching operation of the DC/DC converter from the maximum-power-point tracking operation into the output voltage control operation is delayed, a load does not receive a sufficient electric power, and the operation may need to be stopped or the system may not be able to optimally supply an electric power.

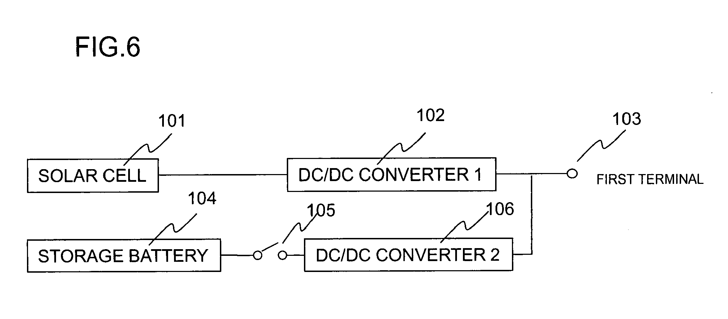

In this case, an electric power supply apparatus having two electric power supply devices, namely, an electric power supply device having an optimum operation voltage and an electric power supply device having a variable voltage, will be commonly described. For descriptive convenience, assume that the former electric power supply device is a solar cell, and the latter electric power supply device is a storage battery.
As shown in Fig. 6, a solar cell 101 is connected to an output terminal 103 through a first DC/DC converter 102. On the other hand, a storage battery 104 is connected to a second DC/DC converter 106 through an ON/OFF switch 105 and further connected to the output terminal 103. The output terminal 103 is connected to a load (not shown) to provide a power supply. The output terminal 103 is alternatively connected to a system power to perform electric power selling by an electric reverse flow. In these connections, the first DC/DC converter 102 constantly performs a maximum-power-point tracking operation to cause the solar cell to fully output an electric power. On the other hand, the second DC/DC converter 106 receives remaining amount information of the storage battery and an output command from an external device to control an output voltage or an output current. Depending on the situation, an electric power is supplied from the solar cell 101 or the output terminal 103, and the electric power is supplied to the storage battery 104 to charge the storage battery 104. In this case, a current to the storage battery is controlled.
In the configuration shown in Fig. 6, the first DC/DC converter 102 performs a maximum-power-point tracking operation, the second DC/DC converter 106 controls an output voltage or an output current, and operations of the respective DC/DC converters need not be switched. However, such two DC/DC converters are required to disadvantageously increase the size and the cost.

In the above description, the solar cell and the storage battery are exemplified. However, the problem is not only caused between the solar cell and the storage battery but also common in the case in which a distributed power supply such as a solar cell, a wind power generator, an engine generator, or a fuel cell having an optimum operating voltage and a storage device typified by a lithium-ion secondary battery, a nickel-hydrogen secondary battery, a capacitor, or the like, operating as a voltage source and having a supply voltage changed depending on conditions (battery SOC or the like) are connected in parallel with each other.
The same problem as described above is also caused in a cutoff circuit used when the storage battery is empty and in a return circuit from a cutoff condition.
The present invention is made to solve the above problems and has as its object to provide a control apparatus and a control method that instantaneously switch a DC/DC converter from a maximum-power-point tracking operation into an output voltage control operation so as to make it possible to constantly supply an electric power to a load.
It is another object to provide a circuit that makes it possible to charge a storage battery with use of a solar cell and prohibits the storage battery from outputting during charging.

### SOLUTION TO THE PROBLEMS

A control apparatus according to the present invention is to solve the above problems and is characterized by including a first electric power supply device, a second electric power supply device that operates as a voltage source and has a supply voltage changing depending on conditions, an electric power converter that converts electric powers of the first electric power supply device and the second electric power supply device into desired electric powers, a monitoring unit that acquires device information of the second electric power supply device, and a control unit that controls the electric power converter on the basis of the information acquired by the monitoring unit.
In the present invention, the first electric power supply device is, for example, a solar cell, a wind power generator, an engine generator, a fuel cell, or the like. In general, an optimum generated voltage is given. The second electric power supply device is, for example, a lithium-ion secondary battery, a nickel-hydrogen secondary battery, a capacitor, or the like. Since the control apparatus according to the present invention includes the characteristic feature described above, the first electric power supply device is operated in an optimum generated voltage condition when the second electric power supply device is disconnected, and an output voltage control operation is performed when the second electric power supply device is connected, thereby supplying a stable electric power.

In an embodiment, the present invention is **characterized in that** the monitoring unit further includes a control unit that acquires an output current or output power information of the electric power converter and controls the electric power converter on the basis of the output current or the output power information. At least one of the electric power supply devices is a storage device, the monitoring unit acquires state-of-charge (SOC) information of the storage device, and the control unit controls the electric power converter on the basis of the state-of-charge (SOC) information.

According to another aspect, the present invention provides a control method to solve the above problems, in a control apparatus having a first electric power supply device having an optimum generated voltage, a second electric power supply device that operates as a voltage source and has a supply voltage changing depending on conditions, an electric power converter that converts electric powers of the first electric power supply device and the second electric power supply device into desired electric powers to output the desired electric powers, and a control unit that acquires output information of the second electric power supply device and controls the electric power converter on the basis of the output information, the method including the steps, performed by the control unit, of: detecting a state of charge of the second electric power supply device; determining whether the state of charge is not less than 0% and less than 100%; outputting a switching control signal of operation prohibition of the electric power converter and an output control operation mode when the state of charge is not less than 0% and less than 100%.
Furthermore, a switching element is provided between the second electric power supply device and the electric power converter, and the steps of cutting off the switching element when the state of charge is 100%; and outputting a switching control signal of operation permission of the electric power converter and a maximum-power-point tracking operation mode are included. Furthermore, the step of outputting a switching command of an operation stop mode to the electric power converter when the state of charge is 0% is included.

### EFFECTS OF THE INVENTION

According to the present invention, in a state in which the second electric power supply device is disconnected from the first electric power supply device, when the electric power converter performs a maximum-power-point tracking operation, the electric power converter can be instantaneously switched to an output voltage control operation in response to an output request of the storage battery due to a change in load or the like, and an electric power can be output from the second electric power supply device.
The switch is not turned off when the storage battery becomes empty, but the operation of the DC/DC converter is stopped to make it impossible to output an electric power from the storage battery as well as to make it possible to constantly charge the storage battery from a solar cell.

### BRIEF DESCRIPTION OF THE DRAWINGS

Fig. 1 is a block diagram of a control apparatus according to a first embodiment of the present invention.
Fig. 2 is a voltage-power characteristic diagram obtained when an electric power converter according to the present invention performs a maximum-power-point tracking operation.
Fig. 3 is a flow chart showing a transition condition of the control apparatus according to the present invention.
Fig. 4 is a block diagram of a control apparatus according to a second embodiment of the present invention.
Fig. 5 is a block diagram of a control apparatus according to the second embodiment of the present invention.
Fig. 6 is a block diagram of an electric power supply apparatus including two electric power supply devices, i.e., an electric power supply device having a conventional optimum operation voltage and an electric power supply device having a variable voltage.

### MODES FOR CARRYING OUT THE INVENTION

### (First Embodiment)

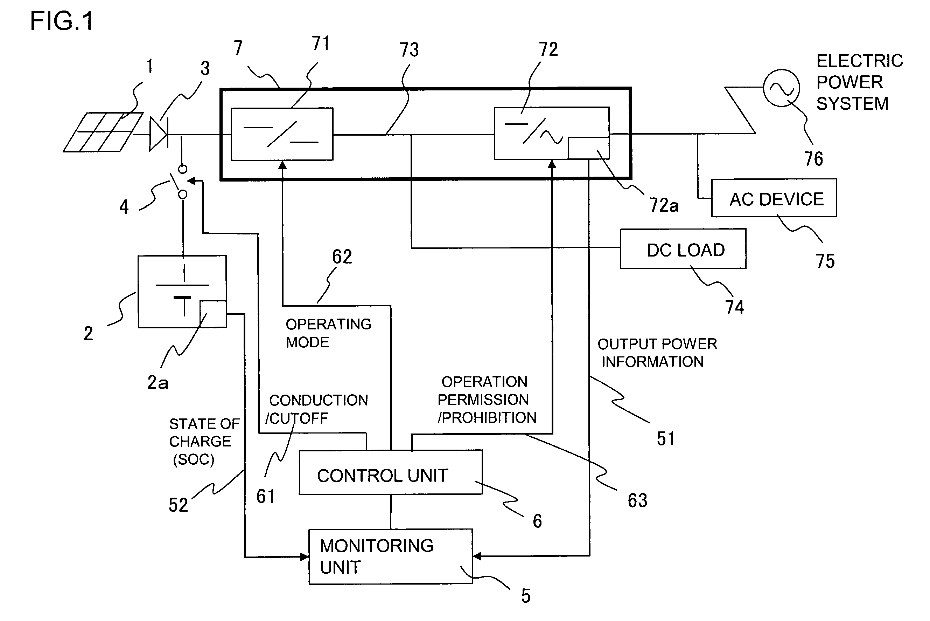

Fig. 1 is a block diagram of a control apparatus according to a first embodiment of the present invention. In this block diagram, a first electric power supply device and a second electric power supply device are included. The first electric power supply device is an electric power supply device having an optimum generated voltage, for example, a solar cell. The second electric power supply device is an electric power supply device that operates as a voltage source and has a supply voltage changing depending on conditions, for example, a secondary battery. However, in place of the solar cell, a fuel cell, a wind power generator, or an engine generator can be used. When the fuel cell or the engine generator is used, the present invention can be applied to a hybrid vehicle. Further, a capacitor can be used in place of the secondary battery.
As shown in Fig. 1, the control apparatus according to the first embodiment includes a solar cell 1, a secondary battery 2, a diode 3 to prevent an electric power from flowing reversely from the secondary battery 2 to the solar battery, a switching element 4 that blocks the secondary battery from being charged, a monitoring unit 5, a control unit 6, and an electric power converter 7. The diode 3 is connected to an output terminal of the solar cell 1 such that an output direction of the solar cell 1 is defined as a forward direction, and is connected to an input terminal of the electric power converter 7 through the diode 3. The secondary battery 2 is connected to an input terminal of the electric power converter 7 through the switching element 4.
The monitoring unit 5 acquires device information such as a state of charge (SOC) of the secondary battery 2 to give a control signal to the control unit 6. Output information such as an output current or an output power from the electric power converter 7 is acquired to give a control signal to the control unit 6. The control unit 6 gives a control signal that turns on or off the switching element 4 to the switching element 4. The control unit 6 outputs a control signal that controls the electric power converter 7 into an operation permission mode or an operation prohibition mode and a control signal that controls the electric power converter 7 into a maximum-power-point tracking operation mode or an output voltage control operation mode.

As the solar cell 1 according to the present invention, there are given a crystalline solar cell module configured by connecting a plurality of crystalline solar cells to each other, a thin-film solar cell module using a cell obtained by serially connecting a plurality of thin-film solar cells each made of a silicon semiconductor or a compound semiconductor formed on a glass substrate by a method such as a CVD, a tandem-structure solar cell module obtained by laminating a crystalline silicon layer and an amorphous silicon layer, and the like. Among these solar cell modules, the thin-film solar cell module obtained by serially connecting a plurality of solar cell elements each made of a silicon semiconductor formed on a glass substrate by a method such as CVD is preferable as it has a high-voltage output and a small temperature coefficient.

As the secondary battery 2, a secondary battery such as a lithium-ion battery, a nickel-hydrogen battery, or a lead storage battery using a chemical reaction, a electric double layer capacitor, or the like can be used. In particular, the lithium-ion battery is preferable because a charging/discharging reaction is basically performed without any side reaction and has high power efficiency. The lithium-ion battery is free from any cycle deterioration or memory effect caused by a poor state of charge and has a charge stop voltage that does not depend on the temperature. For this reason, the lithium-ion battery can be preferably used as the secondary battery of the present invention. As lithium ions used in the present invention, various positive and negative electrode materials are proposed. All the materials can be used. Among the lithium-ion batteries, a lithium-ion battery using LiFePO₄ as a positive electrode material is especially preferable because such a lithium-ion battery has a flat charge-discharge curve.
A protecting circuit of the secondary battery preferably includes an overcharge preventing circuit, an overdischarge preventing circuit, an overcurrent preventing circuit, a voltage monitoring circuit of each cell of storage battery devices connected in series with each other, a balance circuit that adjusts a voltage of each cell, and the like.
A state-of-charge (SOC) detector 2a that detects a state of charge (SOC) of the storage battery 2 is also included. The state-of-charge (SOC) detector 2a is a voltmeter that measures an output voltage from the storage battery 2. However, depending on circumstances, an accumulated state of charge may be measured. As the state of charge (SOC), 100% indicates a full charge condition, and 0% indicates a discharge end condition. Therefore, as the state of charge (SOC), not less than 100% indicates an overcharge condition, not more than 0% indicates an overdischarge condition.

As the switching element 4, for example, a switch that mechanically controls an on/off condition or a field-effect semiconductor switch such as a MOSFET or an IGBT can be used. The present invention uses an IGBT field effect semiconductor switch that can easily perform the on/off control.

The electric power converter 7 includes a DC/DC converter 71 and an inverter 72. The DC/DC converter 71 converts an output voltage from the solar cell 1 into a desired voltage, and the inverter 72 converts a DC power into an AC power to output the AC power. The DC/DC converter 71 is a unidirectional converter or a bidirectional converter. The inverter 72 is a unidirectional inverter or a bidirectional inverter, and includes an output power detector 72a that detects at least an output power. As the DC/DC converter 71 and the inverter 72, a known DC/DC converter and a known inverter can be used, respectively.

The DC/DC converter 71 transfers an operation mode to a maximum-power-point tracking operation mode or an output control operation mode according to a control signal from the control unit 6, and the inverter 72 transfers the operation mode to an operation permission mode or an operation stop mode according to the control signal from the control unit 6.
The maximum-power-point tracking operation mode is an operation mode for the DC/DC converter 71 to extract a maximum electric power from the solar cell because an output voltage from the solar cell changes depending on an output current. This control is also called MPPT (Maximum Power Point Tracking) control. In this control, an input power or an output power is monitored while the DC/DC converter 71 controls an input current to adjust a current and a voltage so as to obtain a maximum output power. When the control is executed, even though an output from the solar cell changes every second depending on an amount of insolation or a surface temperature, the input voltage of the DC/DC converter 71 tracks the output from the solar cell such that a maximum output power can be obtained. For example, in a case in which the input current is increased, when the input power or the output power is larger than a previous value, the input current is further increased. When the input power or the output power is smaller than the previous value, control is performed to reduce the input current.

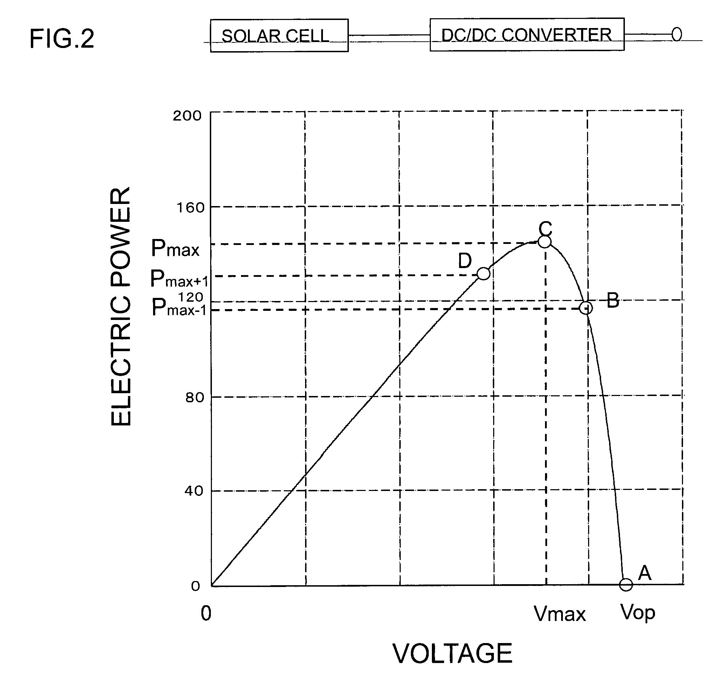

Fig. 2 shows a power-voltage characteristic diagram of a solar cell in a certain insolation condition. In Fig. 2, the abscissa indicates a voltage, and an ordinate indicates an electric power. A maximum-power-point tracking operation will be described below with reference to Fig. 2. When the DC/DC converter outputs no voltage, an input voltage of the DC/DC converter is given by Vop, and an input current thereof is zero (point A in Fig. 2). When the DC/D converter increases an input current thereof, the input power also increases. After an operation point moves to a point B, when the input current of the DC/DC converter is further increased, the operation point moves to a point C. When the point B and the point C are compared with each other, the input current of the DC/DC converter is further increased because the input power of the point C is larger than that of the point B. Then, the operation point moves to a point D. When the point C and the point D are compared with each other, the input current of the DC/DC converter is reduced because the input power of the point C is larger than that of the point D. In this manner, the solar cell is enabled to operate near the maximum power point C.

The output control operation mode controls an operation of the DC/DC converter 71 such that an output voltage, an output current, or an output power of the DC/DC converter 71 is kept at a predetermined voltage.
The operation permission mode permits the inverter 72 to operate.
The operation stop mode stops an operation of the inverter 72. Thus, the inverter 72 is not operated, and an output cannot be obtained.

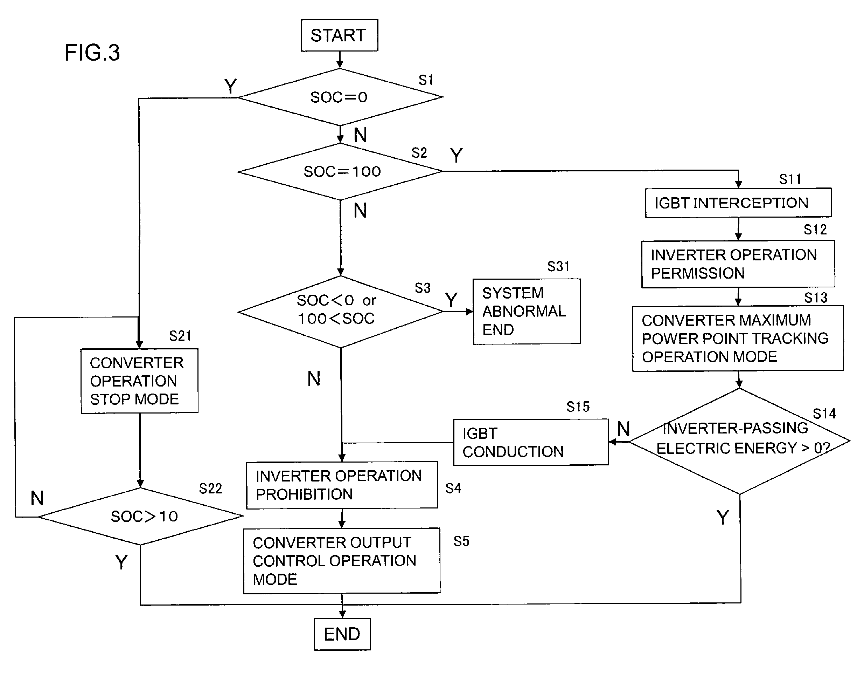

The monitoring unit 5 acquires a detection output of a power value from the output power detector 72a that detects an output power from the inverter 72, and a state-of-charge (SOC) detection output from the state-of-charge (SOC) detector 2a of the storage battery 2.
On the basis of the output power information of the inverter 72 and the state-of-charge (SOC) information of the storage battery 2 that are acquired by the monitoring unit 5, the control unit 6 outputs a conduction/cutoff instruction to the switching element 4 and outputs an operation mode switching control signal that switches the mode into the maximum-power-point tracking operation mode or into the output control operation mode, to the DC/DC converter 71. A control signal that that switches the mode into the operation permission mode or into the operation stop mode is also output to the inverter 72. The control unit 6 is configured by a control unit such as a microcomputer, and operates as shown in the flow chart in Fig. 3.

In order to acquire the output power information of the inverter 72, an inverter output power information acquiring line 51, a state-of-charge (SOC) information acquiring line 52 to acquire a state-of-charge (SOC) detection output of the storage battery 2, a switching element control line 61 that outputs a conduction/cutoff instruction to a switching element 3, an operation mode switching line 62 that outputs an operation mode switching instruction to the DC/DC converter 71, and an inverter operation instruction output line 63 that outputs an operation permission/prohibition instruction to the inverter 72 are included. The lines 51, 52, and 61 to 63 may form connection wires, respectively, or may be connected to each other with a bus line. When a communication is made through the lines 51, 52, and 61 to 64, or through the bus line, communication protocols such as RS-232C and RS-485 can be used.

The electric power supply apparatus according to the present invention shown in Fig. 1 includes one solar cell 1, one secondary battery 2, one diode 3, and one switching element 4. However, for each of them, a plurality of corresponding parts may be provided, or, for any one of them, a plurality of corresponding parts may be provided. In such a case, a serial connection between the solar cell 1 and the diode 3 and a serial connection between the secondary battery 2 and the switching element 3 are connected to an input of the DC/DC converter 71.

An output of the DC/DC converter 71 is connected to the inverter 72 through a DC trunk line 73. A DC load 74 that is operated by a DC power is connected to the DC trunk line 73 that connects the DC/DC converter 71 and the inverter 72 to each other. Thus, a plurality of output terminals are connected to the DC trunk line 73. As the DC load 74, a notebook computer, an electric light, an electric charger for a cellular phone, an electric heater, a water heater, or the like is used.
An AC load 75 that is operated with an AC power and a system power 76 are connected to the output of the inverter 72. Thus, a plurality of AC output terminals are connected to the output of the inverter 72. As the AC load 75, for household use, an air conditioner, a refrigerator, a laundry machine, or the like is used. In an office, a personal computer, a printer, a copying machine, or the like is used.
The electric power supply apparatus according to the present invention is connected to the system power 76, and the solar cell 1 generates an electric power. A residual electric power is caused to reversely flow and sold, without being consumed in the DC load 74 and the AC load 75 and being charged in the storage battery 2.

Fig. 3 is a flow chart showing a transition condition of the control apparatus according to the present invention. The DC/DC converter 71 can operate in the output control operation mode or the maximum-power-point tracking operation mode, and the inverter 72 can operate in the operation permission mode or the operation stop mode.
An operation of the control apparatus according to the present invention will be described below with reference to the flow chart in Fig. 3.
When the operation of the control apparatus is started, the monitoring unit 5 acquires the state of charge from the state-of-charge (SOC) detector 2a of the storage battery 2. On the basis of the state-of-charge (SOC) information acquired by the monitoring unit 5, the control unit 6 determines the state of charge (SOC) of the storage battery is not equal to 0% in step S1 when the state of charge (SOC) of the storage battery ranges from 0 to 100%. In step S2, the control unit 6 determines whether the state of charge (SOC) of the storage battery is not equal to 100%. In step S3, the control unit 6 determines whether the state of charge (SOC) of the storage battery is not equal to or smaller than 0% and not equal to or larger than 100%. When it is determined that the state of charge (SOC) of the storage battery is smaller than 0% or larger than 100%, the storage battery 2 is in an overdischarge condition or an overcharge condition. In step S31, system malfunction is determined to end the process in the flow.
Steps S1 to S3 described above are of determining whether the state of charge (SOC) is equal to or larger than 0% and less than 100%. Thus, the order of steps S1 to S3 may not be the same as described above. For example, an order expressed by S1, S3, and S2, an order expressed by S2, S1, and S3, an order expressed by S2, S3, and S1, an order expressed by S3, S1, and S2, and an order expressed by S3, S2, and S1 may be applicable.

As described above, in steps S1 to S3, it is determined that the state of charge (SOC) of the storage battery ranges from 0 to 100%. For this reason, in subsequent step S4, the operation prohibition of the inverter 72 is instructed. In step S5, an operation mode switching control signal is output such that the mode of the DC/DC converter 71 is transferred to the output control operation mode. Thus, the DC/DC converter 71 operates to keep a predetermined output voltage and supplies an electric power to the DC load 74.
In this operation condition, since the switch 4 is in a conductive state, the storage battery 2 can be charged and discharged. Further, since the inverter 72 is in an operation prohibition condition in step S4, an electric power of the DC trunk line 73 is not supplied to the AC device 75 and the system power 76. In this operation condition, an electric power given by (amount of output from solar cell) - (amount of DC load) is charged in the lithium-ion secondary battery 2. Alternatively, when an amount of output from the solar cell is smaller than an amount of the DC load, the secondary battery is discharged to supply an electric power to the DC load 74.

When the monitoring unit 5 acquires detected information of the state of charge (SOC) of the storage battery given by SOC = 100% by the state-of-charge (SOC) detector 2a of the storage battery 2, on the basis of the information, the control unit 6 determines whether the state of charge (SOC) of the storage battery is not 0% in step S1 and determines whether the state of charge (SOC) of the storage battery is 100% in step S2. For this reason, the operation shifts to step S11 to cut off the switching element 4. The control unit 6, in step S12, outputs an operation permission instruction of the inverter 72, and, in step S13, outputs an operation instruction to transfer the mode of the DC/DC converter 71 to the maximum-power-point tracking operation mode. The control unit 6 transmits an output permission instruction to the inverter 72.

In the operation condition in step S13 described above, the solar cell 1 performs the maximum-power-point tracking operation. Thus, an electric energy given by (amount of output of solar cell) - (amount of DC load) is supplied to the AC load 75 or the system power 76 through the inverter 72.
In this operation condition, in step S14, an electric energy passing through the inverter 72 is monitored to determine whether the value given by (amount of output of solar cell) - (amount of DC load) is zero or less due to a variation in insolation or an increase in amount of the DC load. When the value becomes zero or less, an electric energy passing through the inverter becomes zero or less. In this case, the switching element 4 is electrically conducted in step S15, and the operation shifts to step S4 to prohibit the operation of the inverter 72. In step S5, the DC/DC converter 71 is changed into the output control operation mode. In this manner, the mode of the DC/DC converter 71 is instantaneously switched from the maximum-power-point tracking operation mode to the output control operation mode. However, if the electric energy passing through the inverter 72 is larger than 0, this flow is ended.
In this manner, according to the present invention, an output current from the inverter 72 is monitored to determine whether an electric power consumption of the DC load connected to the DC trunk line 73, the solar cell output, and the storage battery voltage are balanced. When the electric power consumption of the DC load is larger than the output power of the solar cell, the operation of the inverter 72 is prohibited, and an electric power is supplied from the DC/DC converter 71 to the load. However, when the electric power consumption of the DC load is smaller than the output power of the solar cell, the operation of the inverter 72 is permitted, and an electric power is supplied from the inverter 72 to the load.

Thereafter, when the monitoring unit 5 acquires detected information of the state of charge (SOC) of the storage battery given by SOC = 0% by the state-of-charge (SOC) detector 2a of the storage battery 2, on the basis of the information, the control unit 6 determines whether the state of charge (SOC) of the storage battery is 0% in step S1. For this reason, the operation shifts to step S21. In step S21, the monitoring unit 4 outputs an operation switching instruction such that the DC/DC converter 71 is transferred to the operation stop mode.

In this operation condition, the control unit 6 prohibits an electrical conduction of the DC/DC converter 71 and controls such that all the output from the solar cell 1 is charged to the secondary battery 2. When the state of charge (SOC) is larger than 0, the DC/DC converter 71 is immediately transferred to the output control operation mode. At this time, SOC = 0% is immediately given depending on the value given by (amount of output of solar cell) - (amount of DC load), and the system may cause chattering. For this reason, in step S22, it is determined whether the state of charge (SOC) is 10% or more so as to prevent the DC/DC converter 71 from shifting to the output control operation mode until the state of charge (SOC) recovers to 10% or more.

### (Second Embodiment)

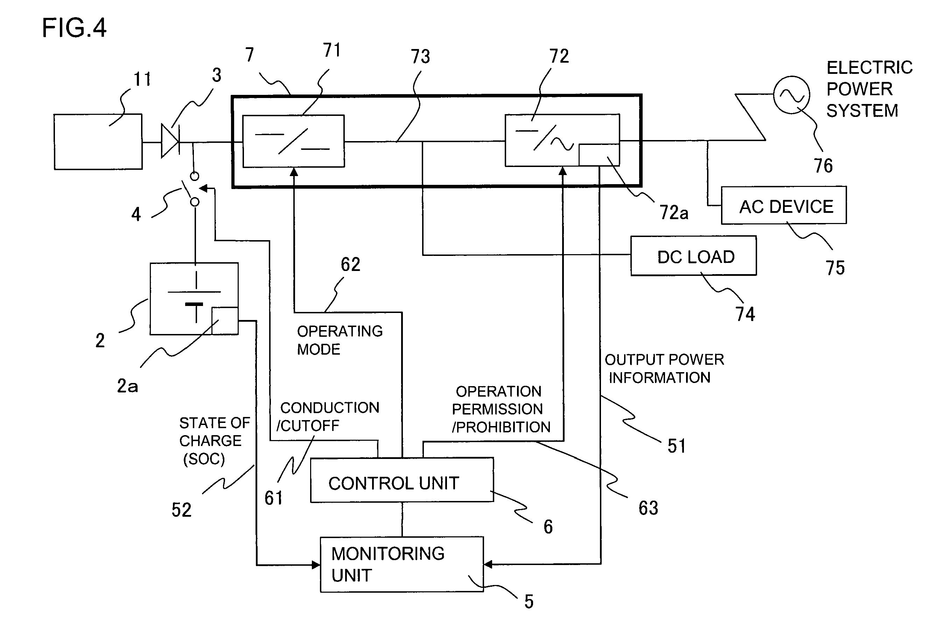

Fig. 4 is a block diagram of a second embodiment. The second embodiment is not different from the first embodiment shown in Fig. 1 except that the solar cell 1 is replaced with a fuel cell 11. It is generally known that the solar cell 1 supplies a maximum electric power in the maximum-power-point tracking operation. On the other hand, it is generally known that the fuel cell 11 desirably outputs an electric power at an optimum operation voltage.
For this reason, in the second embodiment, a system is designed such that a storage battery rated voltage is almost equal to the optimum operation voltage of the fuel cell 11. When the storage battery is connected, the fuel cell 11 operates while being regulated by the storage battery voltage. The DC/DC converter 71 operates in the output voltage control operation mode. (As in the first embodiment,) when the storage battery is disconnected due to the storage battery SOC equal to 0% or 100%, due to an abnormal mode, or the like, the DC/DC converter 71 is in an input voltage optimum operation mode to optimally operate the fuel cell 11 (almost the same as the maximum-power-point tracking operation mode in a solar battery). The output voltage control operation mode and the input voltage optimum operation mode are not changed even though the storage battery is replaced with a capacitor.
For the operation and the stop of the fuel cell main body, any operation may be performed. For example, the fuel cell may be operated or stopped depending on a state of charge (SOC) of the storage battery, an amount of the DC load, or time, or may be operated all the time. The control unit may control the operation and the stop of the fuel cell main body.

### (Third Embodiment)

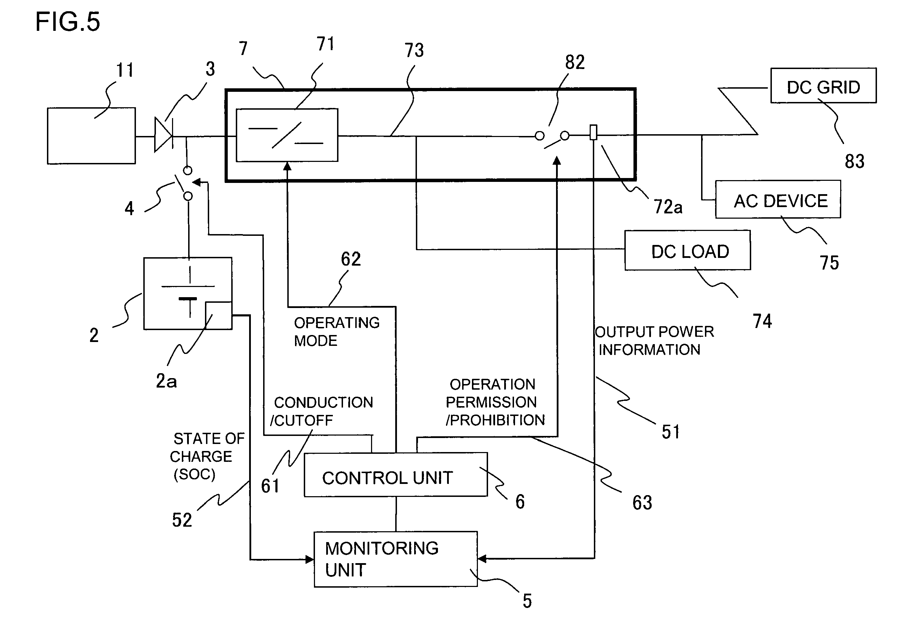

Fig. 5 is a block diagram of a third embodiment. The third embodiment is different from the first embodiment shown in Fig. 1 in that an output power system is not an AC power system but a DC grid 83 supposed as a micro-grid or the like and the inverter 72 is replaced with a switch unit 82. In the first embodiment, an output power from the inverter 72 is detected. To the contrary, in the third embodiment, a current of the switch unit 82 is detected. Alternatively, the current detection may be replaced with electric power detection. The operation of the switch unit 82 corresponds to the operation/ stop of the inverter in the first embodiment. The operation corresponds to an ON state, and the stop corresponds to an OFF state. The other configurations are the same as those in the first embodiment.

### (Fourth Embodiment)

In the first embodiment, in the condition given by SOC = 0%, the DC / DC converter 71 is in the operation stop mode, and an output cannot be obtained. For this reason, an electric power cannot be supplied to the DC load 74. However, when a bidirectional inverter is used as the inverter 72, an electric power can be supplied from the system power 76 to the DC load 74 only when SOC = 0% is satisfied. When time control is performed such that a bidirectional converter is used as the DC/DC converter 71 and the bidirectional inverter is operated late at night, a secondary battery can be charged from a system power in a late-night electric power zone in which an electric power rate is low. The other configurations and operations are the same as those in the first embodiment.

### (Fifth Embodiment)

In the first embodiment, the control unit 6 instructs the switching element 4 to be electrically conducted/cut off, switches the operation mode of the DC/DC converter 71, and instructs the inverter 72 to be permitted to output or to be prohibited from outputting. The monitoring unit 5 does not monitor the respective conditions of the switching element 4, the DC/DC converter 71, and the inverter 72. However, the monitoring unit 5 includes a monitoring unit for a conduction/cutoff condition of the switching element 4, a switching condition of the control operation of the DC/DC converter 71, and an output permission/prohibition condition of the inverter 72. By monitoring these parts, the accuracy of the system is improved to make it possible to prevent an erroneous operation and the like.

### (Sixth Embodiment)

In the first embodiment, an IGBT element that cuts off an electric power only in a charging direction is used as the switching element 4. However, when an IGBT element that cuts off electric powers in both the directions is used, in a condition given by SOC = 0%, the operation step mode of the DC/DC converter 71 is not set as the operation stop mode of the DC/DC converter 71, but the IGBT element on the charging side may be cut off. However, when the solar cell starts a next output, if the IGBT element on the charging side is still cut off, the DC/DC converter 71 supplies an electric power to the DC trunk line 73 without starting charging to the storage battery. For this reason, there is further required control to monitor an output situation or the like of the DC/DC converter 71 so as to electrically conduct the IGBT element on the charging side.

### (Seventh Embodiment)

In the first embodiment, SOC = 0 is determined in step S1 and SOC = 100 is determined in step S2 to perform condition transition. However, when A ≤ SOC < 100 is set in step S1 and 0 < SOC ≤ B is set in step S2, A and B may be set to any value ranging from 0 to 50. Desirable conditions of the SOC for the condition transition is change depending on design manuals. In the above embodiments, the condition transition is performed on the basis of the value of the SOC. Alternatively, the condition transition may be performed on the basis of the storage battery voltage.

### (Eighth Embodiment)

In the first embodiment, when the condition given by 0 < SOC < 100 is satisfied, an output of the inverter 72 is prohibited. However, such numerical setting is a matter of a design manual of the system. For this reason, depending on the design manuals, the inverter 72 may be permitted to be operated in the condition given by 0 < SOC < 100 to supply an electric power to the AC load 75 or cause the electric power to reversely flow to the system power 76. For example, in a case in which an electric power of 1 kW must reversely flow to the system power from nine o'clock to 10 o'clock, even in the range given by 0 < SOC < 100 only for the period of time, the electric reverse flow can be achieved by adding a flow in which the control unit 6 instructs the inverter 72 to output an electric power of 1 kW without performing a flow of prohibiting an output from the inverter 72.
In the embodiments described above, when SOC = 100%, in step S14, control is performed by monitoring an output electric energy from the inverter. The output electric energy from the inverter is equal to a value given by (amount of output of solar cell) - (amount of DC load). For this reason, both the output electric energy of the solar cell and the electric power consumption of the DC load may be measured, and a difference between both the values may be used.

### (Ninth Embodiment)

In the first embodiment, in the condition given by SOC = 0%, the DC/DC converter 71 is defined not to shift to the output voltage control operation mode until the state of charge (SOC) recovers to 10% or more. However, the numerical value, i.e., 10% is not particularly limited, and any numerical value may be used as long as the system does not cause chattering. Similarly, even in the condition given by SOC = 100%, if the inverter 72 permits/prohibits an operation, the system may cause chattering. When the inverter 72 switches permission/prohibition of the operation, prevention of chattering is preferably performed such that any further switching is not performed for a while, or the like.

### DESCRIPTION OF REFERENCE SIGNS

- 1:: Solar cell
- 2:: Storage battery
- 3:: Diode
- 4:: Switching element
- 5:: Monitoring unit
- 6:: Control unit
- 7:: Electric power converter
- 71:: DC/DC converter
- 72:: Inverter
- 73:: DC trunk line
- 74:: DC load
- 75:: AC load
- 76:: System power

## Claims

1. A control apparatus comprising:
a first electric power supply device;
a second electric power supply device that operates as a voltage source and has a supply voltage changing depending on conditions;
an electric power converter that converts electric powers of the first electric power supply device and the second electric power supply device into desired electric powers;
a monitoring unit that acquires device information of the second electric power supply device; and
a control unit that controls the electric power converter based on the device information acquired by the monitoring unit.

2. The control apparatus according to claim 1, wherein the monitoring unit further acquires an output current or output power information of the electric power converter, and the control unit controls the electric power converter based on the output current or the output power information.

3. The control apparatus according to claim 1 or 2, wherein the second electric power supply device is a storage device, the monitoring unit acquires state-of-charge information of the storage device, and the control unit controls the electric power converter based on the state-of-charge information.

4. The control apparatus according to any one of claims 1 to 3, wherein an on/off switch is provided between the storage device and the electric power converter, and the control unit controls the on/off switch based on state-of-charge information.

5. The control apparatus according to any one of claims 1 to 4, wherein the first electric power supply device is a solar battery, the monitoring unit acquires state-of-charge information of the storage device, and the control unit controls the electric power converter to a maximum-power-point tracking operation mode and an output control operation mode based on the state-of-charge information.

6. The control apparatus according to any one of claims 1 to 5, wherein the first electric power supply device is a fuel cell, the monitoring unit acquires state-of-charge information of the storage device, and the control unit controls the electric power converter to an input voltage optimum operation mode and an output control operation mode based on the state-of-charge information.

7. The control apparatus according to claim 5 or 6, wherein the control unit further controls the electric power converter to an operation stop mode.

8. The control apparatus according to any one of claims 1 to 7, wherein the electric power converter includes a DC/DC converter and an inverter, the DC/DC converter is controlled to a maximum-power-point tracking operation mode and an output control operation mode, and the inverter is controlled to an operation permission mode and an operation stop mode.

9. The control apparatus according to any one of claims 1 to 8, wherein the DC/DC converter is a unidirectional or bidirectional DC / DC converter.

10. The control apparatus according to any one of claims 1 to 8, wherein the inverter is a unidirectional or bidirectional inverter.

11. The control apparatus according to claim 8, wherein an output of the DC/DC converter is connected to a DC grid through a switch unit, a load is connected to the output of the DC/DC converter, and an output of the switch unit is monitored by the monitoring unit to on/off-control the switch unit.

12. A control method, in a control apparatus including a first electric power supply device having an optimum generated voltage, a second electric power supply device that operates as a voltage source and has a supply voltage changing depending on conditions, an electric power converter that converts electric powers of the first electric power supply device and the second electric power supply device into desired electric powers to output the desired electric powers, and a control unit that acquires output information of the second electric power supply device and controls the electric power converter based on the output information, the method comprising the steps, performed by the control unit, of:
detecting a state of charge of the second electric power supply device;
determining whether the state of charge is not less than 0% and less than 100%; and
outputting a switching command for operation prohibition of the electric power converter and an output control operation mode when the state of charge is not less than 0% and less than 100%.

13. The control method according to claim 12, the apparatus further including a switching element between the second electric power supply device and the electric power converter, the method further comprising the steps of:
cutting off the switching element when the state of charge is 100%; and
outputting a switching command for operation permission of the electric power converter and a maximum-power-point tracking operation mode.

14. The control method according to claim 12 or 13, further comprising the step of, when the state of charge is 0%, outputting a switching command for an operation stop mode to the electric power converter.
